# EUROPEAN PATENT APPLICATION

(11) **EP 3 185 186 A1**
(43) Date of publication of application: **28.06.2017**
(21) Application number: 16199782.0
(22) Date of filing: 21.11.2016
(51) Int. Cl.: G06Q 10/00

(54) **A VIDEO SURVEILLANCE SYSTEM, A METHOD APPLIED TO A VIDEO SURVEILLANCE SYSTEM AND A METHOD FOR ACTIVATING A SERVICE BY A VIDEO SURVEILLANCE SYSTEM**

(30) Priority: 23.12.2015 TW 104143320
(71) Applicant: Synology Incorporated, Taipei 103 (TW)
(72) Inventor: Li, Si-Xian, 100 Taipei City (TW); Chiu, Yu-Hsiang, 106 Taipei City (TW); Ho, Chia-Ju, 238 New Taipei City (TW)
(74) Representative: Michalski Hüttermann & Partner Patentanwälte mbB

(57) **Abstract**

The present invention provides a monitoring service system including a processing circuit arranged to control the monitoring service system. The processing circuit includes a system management module, a camera management module, and an identification-code analysis module. The system management module produces an identification code in response to an identification-code request received from a mobile device, and transmits the identification code to the mobile device. The identification-code analysis module identifies whether video streams captured by cameras include the identification code having information of the mobile device. The system management module provides a service to the mobile device according to information of a first camera that captures the identification code and the information of the mobile device.

## Description

### CROSS REFERENCE TO RELATED APPLICATIONS

This Application claims priority of Taiwan Patent Application No. 104143320, filed on Dec. 23, 2015, the entirety of which is incorporated by reference herein.

### BACKGROUND OF THE INVENTION

### Field of the Invention

The present invention relates to a video monitoring system, and in particular it relates to a video monitoring system capable of selecting a camera by an identification code.

### Description of the Related Art

In recent years, the use of network cameras has become more and more widespread in people's daily lives, thereby providing convenience for people. One example is in video surveillance systems.

In a video surveillance system, a user has to perform a series of complicated operations, and the user may successfully select a specific camera to program the camera's settings or to calibrate the camera. For example, a surveillance system, may separate the cameras into many groups, and display the images from a group of cameras on a graphical user interface (GUI). These groups may be sorted by camera brand. As a result, if the user needs to select a specific camera from among the groups of cameras, the user must learn some additional details about the camera in advance, such as the model number, the brand name, and so on. The need to learn these additional details can be a source of inconvenience to the user, because some details, such as model numbers, are hard to memorize.

Furthermore, when the user uses a mobile device to select a specific camera using his touch screen, the screen size of the mobile device may be too small, causing further difficulties when searching for and selecting a camera. For example, a smartphone may only have a 4.0-5.5 inch (diagonal) display, which would allow, at most, one or two fingers to operate the touch screen. This size limitation of the touch screen can cause inaccuracies in selecting a specific camera, and can cause such searches to take a long time to conduct.

### BRIEF SUMMARY OF THE INVENTION

A detailed description is given in the following embodiments with reference to the accompanying drawings.

An exemplary embodiment provides a video surveillance system. The video surveillance system includes a processing system, a storage system, and one or more programs. The programs are stored in the storage system and configured to be executed by the processing system. The programs include instructions for receiving a plurality of video streams captured by a plurality of cameras, detecting whether the video streams include an identification code in response to an identification code detection request, and decoding the identification code obtained from the video streams to obtain information of the identification code. Furthermore, the information of the identification code includes a mobile device's information.

Another exemplary embodiment provides a method applied to a video surveillance system. The method includes: receiving a plurality of video streams captured by a plurality of cameras; identifying whether the video streams include an identification code in response to an identification code detection request; and decoding the identification code obtained from the video stream to obtain information of the identification code. Furthermore, the information of the identification code includes a mobile device's information.

### BRIEF DESCRIPTION OF THE RAWINGS

FIG. 1 is a schematic diagram illustrating a monitoring service system, cameras and a mobile device in accordance with some embodiments of the present invention.
FIG. 2 is a timeline illustrating an example of the camera management module transmitting the captured video streams in accordance with an embodiment.
FIG. 3 is a scenario illustrating an identification code being captured by a camera in accordance with an embodiment.
FIG. 4 is a schematic diagram illustrating a video surveillance system in accordance with another embodiments of the present invention.
FIG. 5 is a schematic diagram illustrating a video surveillance system in accordance with another embodiments of the present invention.
FIG. 6 is a schematic diagram illustrating a video surveillance system in accordance with another embodiments of the present invention.
FIG. 7 is a flow chart illustrating a method applied to a video surveillance system in accordance with an embodiment of the present invention.
FIG. 8 is a flow chart illustrating a method for detecting an identification code detection request in accordance with an embodiment of the present invention.
FIG. 9 is a flow chart illustrating a method for providing a service in accordance with an embodiment of the present invention.
FIG. 10 is a flow chart illustrating a method for activating a service by a video surveillance system with an embodiment of the present invention.
FIG. 11 is a flow chart illustrating a method applied to a video surveillance system in accordance with another embodiment of the present invention.
FIG. 12 is a schematic diagram illustrating a monitoring service system, cameras, and a mobile device in accordance with another embodiment of the present invention.

### DETAILED DESCRIPTION OF THE INVENTION

In the following description, numerous details, examples and embodiments are set forth for the purpose of explanation. However, one of ordinary skill in the art will recognize that the invention is not limited to the embodiments set forth and that the invention may be practiced without some of the specific details discussed.

Typically a video surveillance system may have a plurality of cameras, and the video surveillance system can provide a graphical user interface (GUI) displayed on a display to show the settings of these cameras. However, in some circumstances, it may be difficult and inconvenient for the user to search for or select a specific camera. For example, when the user is outdoors and can see that one of the cameras near his position needs to be reset, it may be hard to find this particular camera on the GUI without knowing any specific information about this camera.

Certain embodiments of the present invention provide techniques for immediately selecting a desired camera in a video surveillance system. In some embodiments, the user only needs to show an identification code (which can be displayed on a mobile device) to the camera, and the mobile device can immediately display a settings page for that specific camera. In another embodiment, when the video surveillance system decodes the identification code sent from the mobile device, the video surveillance system can provide voice communication with the mobile device. In yet another embodiment, when the video surveillance system decodes the identification code sent from a mobile device, the video surveillance system can locate the mobile device and provide positional information to the mobile device if necessary.

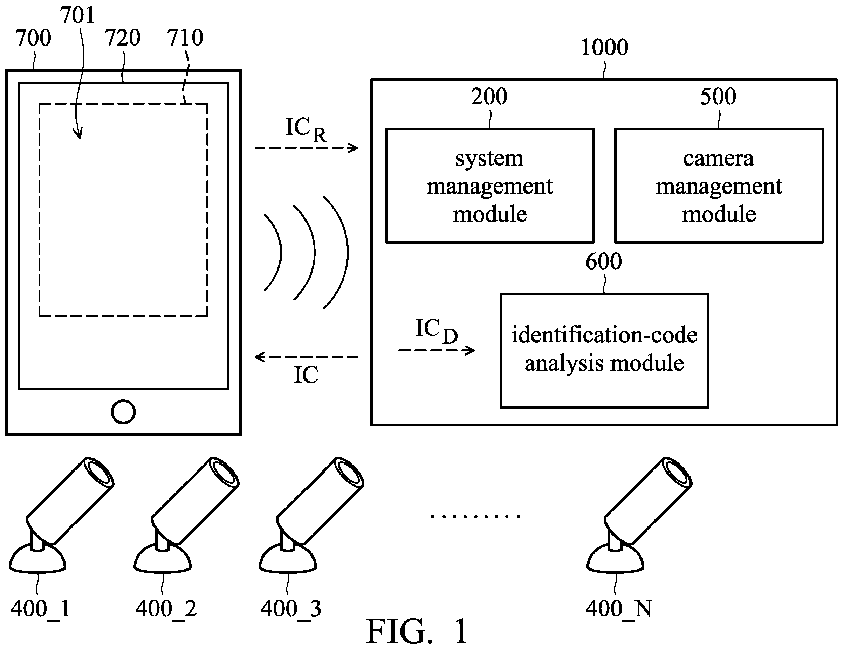

FIG. 1 is a schematic diagram illustrating a monitoring service system, cameras and a mobile device in accordance with some embodiments of the present invention. The video surveillance system 1000 can include multiple subsystems such as a system management module 200, a camera management module 500 and an identification-code analysis module 600. One or more communication paths can be provided to enable one or more of the subsystems to communicate and exchange data with one another. The video surveillance system 1000 in FIG. 1 can be implemented in software, hardware (integrated circuit), or a combination thereof. In some embodiments, the software can be stored on a transitory or non-transitory computer readable storage medium and can be executed by one or more processing units.

It should be appreciated that the video surveillance system 1000 as shown in FIG. 1 can include more or fewer components than those shown in FIG. 1. In some embodiments, the video surveillance system 1000 can be a part of an electronic computer device, such as a network attached storage (NAS) server. The various components in the video surveillance system 1000 can be implemented as a stand-alone application or integrated into another application (e. g. a web browser application or any other suitable application), while in some embodiments the components in the video surveillance system 1000 can be implemented within an operating system, such as DiskStation Manager (DSM).

In some embodiments, a system management module 200 is configured to produce an identification code IC in response to an identification-code request IC_{R} received from a mobile device 700. In some instances, the mobile device 700 may display an identification code request interface 710. The identification code request interface 710 can be performed by a surveillance application 701 programmed for execution on a smartphone or a tablet. The mobile device 700 can execute the surveillance application 701 to provide the identification code request interface 710 and to transmit an identification-code request IC_{R} to the video surveillance system 1000. The identification-code request IC_{R} includes identification data. For example, the identification data may include the information such as the phone number, Internet Protocol address, and/or MAC address of the mobile device 700, but the present invention is not limited thereto. In some embodiments, the identification-code request IC_{R} may include any other identification data of the mobile device 700. When the system management module 200 receives the identification-code request IC_{R} including the contact information of the mobile device 700, e.g. a phone number, an Internet Protocol address and/or a MAC address, the system management module 200 produces the identification code IC according to the information of the mobile device 700. That is, the identification code IC may also include the contact information of the mobile device 700. In an embodiment, the system management module 200 can transmit the produced identification code IC to the mobile device 700 through the network, such as 3G, 4G or EDGE, WiFi (IEEE 802.11 family standards, or other mobile communication technologies, or any combination thereof). After the mobile device 700 receives the identification code IC, the surveillance application 701 can enable the display 720 of the mobile device 700 to show the received identification code IC.

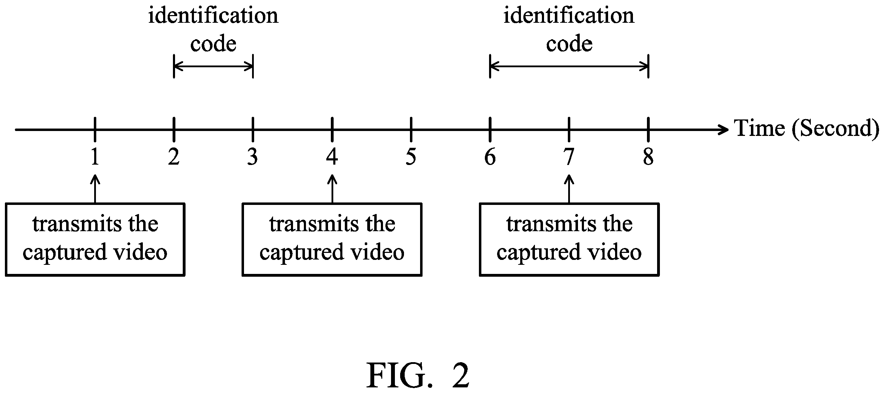

In some embodiments, a camera management module 500 is configured to receive a plurality of video streams captured by a plurality of cameras 400_1 - 400_N, in which the letter "N" represents a positive integer greater than one. In some instances, the cameras 400_1 - 400_N are implemented in different places, and may capture video streams from those places. The camera management module 500 is configured to receive the plurality of video streams and store the video streams in the storage module and/or transmit the video streams to the identification-code analysis module 600. In an embodiment, the camera management module 500 may periodically transmit the captured video streams to the identification-code analysis module 600. For example, FIG. 2 is a timeline illustrating an example of the camera management module 500 transmitting the captured video streams. As shown in FIG. 2, the camera management module 500 transmits the captured video streams every 3 seconds, e.g. the 1^{st} second, the 4^{th} second and the 7^{th} second. By transmitting the captured video streams periodically, the computational load of the identification-code analysis module 600 can be reduced. In another embodiment, the time interval at which the camera management module 500 transmits the captured video streams can be fewer or longer than 3 seconds, and this time interval can be designed by the developer for enhancing computing performance and maintaining the performance of image recognition. In yet another embodiment, the camera management module 500 may transmit the captured video streams substantially continuously. That is, the time interval is substantially zero.

In some embodiments, the identification-code analysis module 600 is configured to detect whether the video streams include an identification code IC in response to an identification code detection request IC_{D}, and to decode the identification code IC obtained from the video streams to obtain information of the identification code IC. In some instances, the identification-code analysis module 600 is configured to identify the video streams captured by the cameras 400_1 - 400_N to determine whether any of the video streams includes the identification code IC and to decode the identification code IC. In an embodiment, the identification code IC can be a QR code, but the present invention is not limited thereto. In other embodiments, the identification code IC can be a bar code or digital codes.

In some embodiments, the identification code detection request IC_{D} can be transmitted to the video surveillance system 1000 from the mobile device 700. Furthermore, the reaction wherein the video surveillance system 1000 produces the identification code IC in response to the identification-code request IC_{R} can be regarded as an identification code detection request IC_{D}. In another embodiment, the video surveillance system 1000 can produce the identification code detection request IC_{D} by itself. For example, the user may press a button implemented on any of the cameras 400_1 - 400_N to enable the identification-code analysis module 600 to start identifying the identification code IC. In another example, the identification-code analysis module 600 can start to identify the identification code IC according to some rules, in which one of the rules can be that the image of the mobile device 700 must occupy at least 50 % of the area of any frames captured by the cameras 400_1 - 400_N. In an embodiment, the identification-code analysis module 600 can directly receive the identification code detection request IC_{D} and ask the camera management module 500 for the video streams in response to the received identification code detection request IC_{D}.

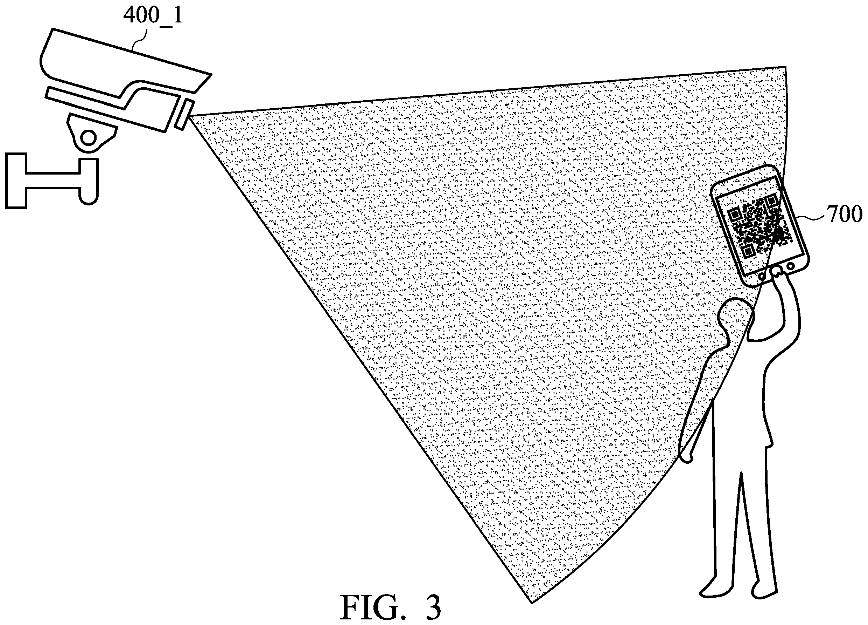

FIG. 3 is a scenario illustrating an identification code IC being captured by a camera. In an embodiment, after the system management module 200 transmits the produced identification code IC to the mobile device 700, the mobile device 700 can show the identification code IC to one of the cameras 400_1 - 400_N, for example the camera 400_1. It should be appreciated that, in order to show the identification code IC to one of the cameras 400_1 - 400_N, the mobile device 700 has to display the identification code IC, e.g. QR code, in the perspective view of one of the cameras 400_1 - 400_N, in which the perspective view is the angular range defined by a multitude of viewing directions that can be captured by the camera. Furthermore, the system management module 200 can enable the camera management module 500 to transmit the captured video streams to the identification-code analysis module 600, and also enable the identification-code analysis module 600 to identify whether the received video streams have an identification code IC. As shown in FIG. 3, since the camera 400_1 has transmitted the identification code IC, the identification-code analysis module 600 can decode the identification code IC from the video streams to obtain the information of the identification code IC. In an embodiment, the information of the identification code IC includes the information of the mobile device 700. For example, the identification code IC may include the contact information of the mobile device 700, such as phone number, Internet Protocol address and MAC address of the mobile device.

Referring back to FIG. 2, if the mobile device 700 displays the identification code IC in the perspective view of the camera 400_1 during a time period, e.g. 2^{nd} - 3^{rd} second, the video stream captured the identification code IC by the camera 400_1 may not be able to be transmitted to the identification-code analysis module 600, so that the identification code IC showed by the mobile device 700 may not be detected by the identification-code analysis module 600. In another instance, if the mobile device 700 displays the identification code IC in the perspective view of the camera 400_1 during a time period, e.g. 6^{th} d 8^{th} second, the video stream captured the identification code IC by the camera 400_1 will be transmitted to the identification-code analysis module 600, and the identification code IC showed by the mobile device 700 will be detected by the identification-code analysis module 600. To make sure that the displayed identification code IC can be detected by the identification-code analysis module 600, in some embodiments, the mobile device 700 proceeds to display the identification code IC in the perspective view of one of the cameras 400_1 - 400_N for a predetermined period, in which the proceeding predetermined period can be 2 seconds, 3 seconds, 4seconds, etc. The proceeding predetermined period can be designed by the developer for ensuring that the displayed identification code IC can be detected by the identification-code analysis module 600 according to the time interval at which the camera management module 500 transmits the captured video streams.

In an embodiment, by decoding the identification code IC, the video surveillance system 1000 can obtain the contact information of the mobile device 700. In another embodiment, by decoding the identification code IC, the video surveillance system 1000 can identify which camera is capturing the identification code IC. For example, in an example of FIG. 3, the video surveillance system 1000 can identify camera 400_1 as the camera that has captured the identification code IC. As a result, the video surveillance system 1000 can provide at least one service to the mobile device 700 according to the information of the mobile device 700 and/or information of one of the cameras that has captured the identification code IC. It should be appreciated that the information of the cameras may include the identification code, the model number, the brand name, the location, and/or other specifications of the camera. The term "service" used herein means providing information, suggestions and/or instructions to the mobile device 700 in order to directly or indirectly assist the mobile device 700 to perform a specific task.

In one of the embodiments, the video surveillance system 1000 can provide service according to user interaction. More specifically, after decoding the identification code IC, the video surveillance system 1000 transmits a jump instruction to the mobile device 700 according to the information obtained by decoding the identification code IC. When the mobile device 700 receives the jump instruction from the video surveillance system 1000, the surveillance application 701 of the mobile device 700 displays a user interface with at least one application function in response to the received jump instruction. The application functions may be represented by icons or characters for the user to choose. Furthermore, the video surveillance system 1000 can detect the user interaction from the mobile device 700 to know which application function was chosen by the user and provide the service accordingly.

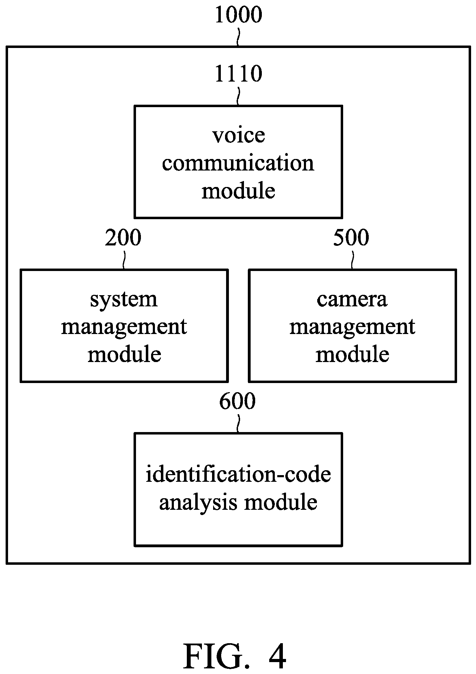

In one embodiment, the video surveillance system 1000 can provide service to the mobile device 700 by establishing voice communications with the mobile device 700 or one of the plurality of cameras 400_1 - 400_N after obtaining the information of the identification code IC. In this embodiment, the video surveillance system 1000 may further include a voice communication module 1100, as shown in FIG. 4. When a user of the mobile device 700 wants to initiate voice communication with service personnel in order to obtain assistance, the user may select the application function that corresponds to voice communication on the user interface. It should be appreciated that the service personnel at the service end can be a human or a computer program that works as an intelligent personal assistant and knowledge navigator, in which the computer program can be implemented in the voice communication module 1100. After selecting the voice communication, the surveillance application 701 transmits a signal corresponding to the selected voice communication to the video surveillance system 1000 in response to the selection made by the user, so that the video surveillance system 1000 can detect the user interaction according to the returned signal. In this embodiment, the video surveillance system 1000 detects that the user requires voice communication according to the received signal, and the surveillance application 701 establishes voice communication with the mobile device 700 or the camera that captures the identification code IC by the voice communication module 1100. It should be appreciated that the voice communication module 1100 may transmit and receive voice calls between the mobile device 700 and the voice communication module 1100 via the network, such as 3G, 4G or EDGE, WiFi (IEEE 802.11 family standards, or other mobile communication technologies, or any combination thereof). In another embodiment, the voice communication can also be established by the mobile device 700. More specifically, after the video surveillance system 1000 detects that the user requires voice communication according to the received signal, the surveillance application 701 transmits information about the video surveillance system 1000 to the mobile device 700, so that the mobile device 700 can establish voice communication with the video surveillance system 1000 according to the information of the video surveillance system 1000, in which the information of the video surveillance system 1000 may include the Internet Protocol address, and/or MAC address of the video surveillance system 1000. As a result, the user can obtain the assistant or information through the voice communication that has been established.

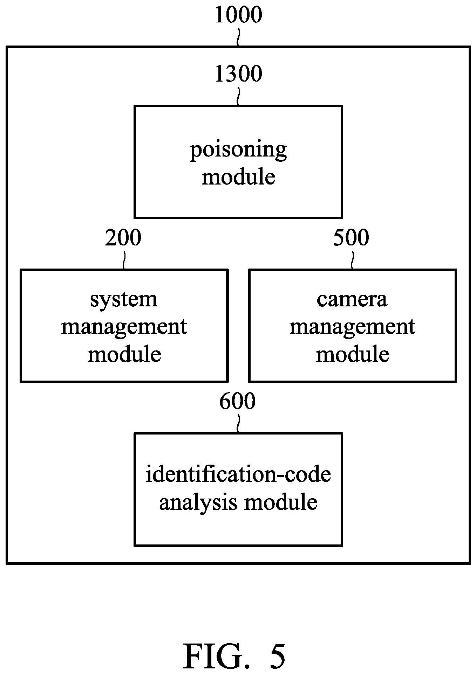

In another embodiment, the video surveillance system 1000 can provide service to the mobile device 700 by identifying the position of one of the cameras 400_1 - 400_N on an electronic map (E-map) according to the information of the camera that captures the identification code after obtaining the information of the identification code IC. In this embodiment, the video surveillance system 1000 may further include a positioning module 1300, as shown in FIG. 5. When a user of the mobile device 700 wants to know his/her location, the user may select the application function corresponding to location on the user interface. After selecting location, the surveillance application 701 transmits a signal corresponding to the selected location to the video surveillance system 1000 in response to the selection made by the user, so that the video surveillance system 1000 can detect user interaction according to the returned signal. In this embodiment, the video surveillance system 1000 detects that the user requires a location-based service according to the received signal. In response to the user's selection and the detected interaction, the surveillance application 701 obtains the location of a specific camera by the positioning module 1300 according to the information of the specific camera, wherein the specific camera is the camera that captures the identification code IC. Next the surveillance application 701 marks the position of the specific camera on an E-map, and transmits the E-map with the mark of the specific camera to the mobile device 700. It should be appreciated that the positioning module 1300 can be a database storing all of the locations of the cameras or a GPS that can locate the cameras 400_1 - 400_N. As a result, the user can determine his/her location on the E-map. In one embodiment, the database storing all of the locations of the cameras also includes the information of which floor the cameras 400_1 - 400_N are implemented in, so that the information of the stores and terminals can also be provided to the user when the user is in a department store or an airport.

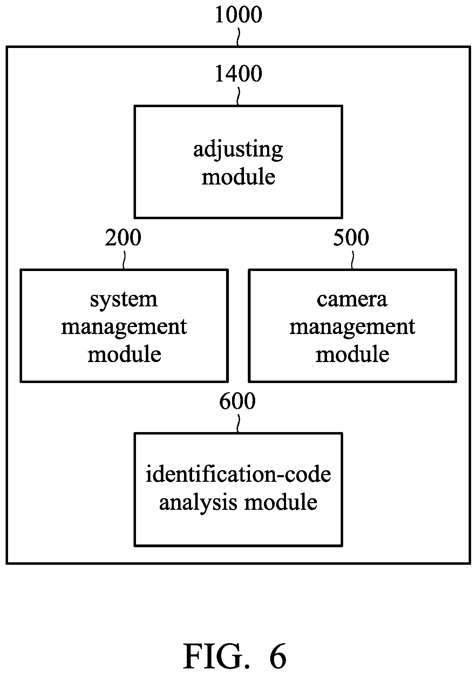

In yet another embodiment, after obtaining the information of the identification code IC, the video surveillance system 1000 can provide service to the mobile device 700 by transmitting camera-adjustment information of one of the cameras 400_1 - 400_N to the mobile device 700 according to information of one of the cameras 400_1 - 400_N and the information of the mobile device 700. In this embodiment, the video surveillance system 1000 may further include an adjusting module 1400, as shown in FIG. 6. When a user of the mobile device 700 wants to adjust the camera that captures the identification code IC, the user may select the application function corresponding to the camera adjustment on the user interface. After selecting the camera adjustment, the surveillance application 701 transmits a signal corresponding to the selected camera adjustment to the video surveillance system 1000 in response to the selection made by the user, so that the video surveillance system 1000 can detect the user interaction according to the returned signal. In this embodiment, the video surveillance system 1000 detects that the user needs to adjust the camera according to the received signal. In response to the user's selection and the detected interaction, the adjusting module 1400 produces a command according to the information of the camera that captured the identification code IC, and transmits the produced command to the mobile device 700, in which the command may include the information of the camera that captures the identification code IC, the address of an adjustment interface including various options for adjusting the camera, and/or the suggestions for adjusting the camera, etc. It should be appreciated that the adjusting module 1400 can be a database storing all of the corresponding adjustment information of the cameras, etc. As a result, the user can adjust the camera using the adjustment interface and suggestions provided.

In some embodiments, the identification code IC can be produced by the mobile device 700. Namely, the mobile device 700 does not need to request the video surveillance system 1000 for the identification code IC by the identification-code request IC_{R}, the mobile device 700 may have an identification-code producer (not shown) to produce the identification code IC according to its own information. Furthermore, the mobile device 700 can also transmit an identification code detection request IC_{D} to the system management module 200 or the identification-code analysis module 600 of the video surveillance system 1000 to enable the identification process.

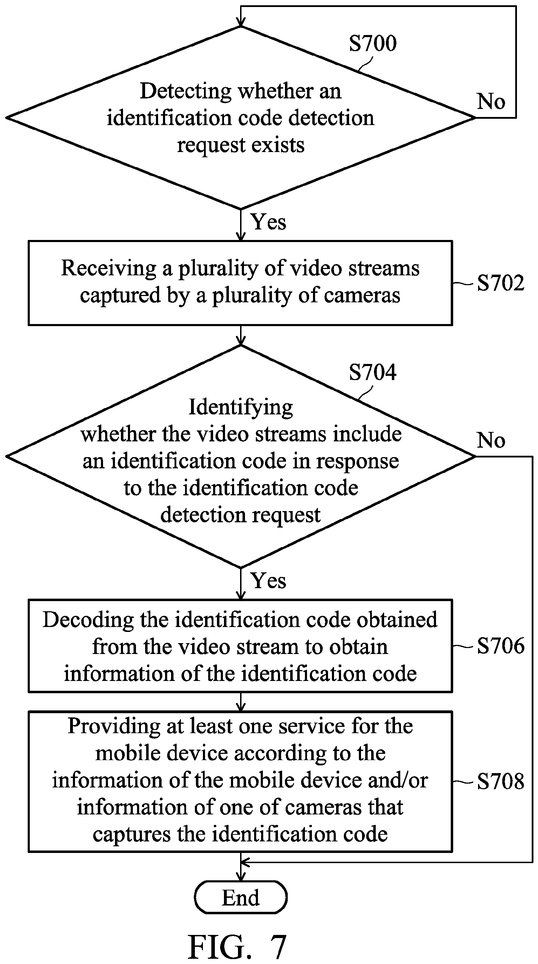

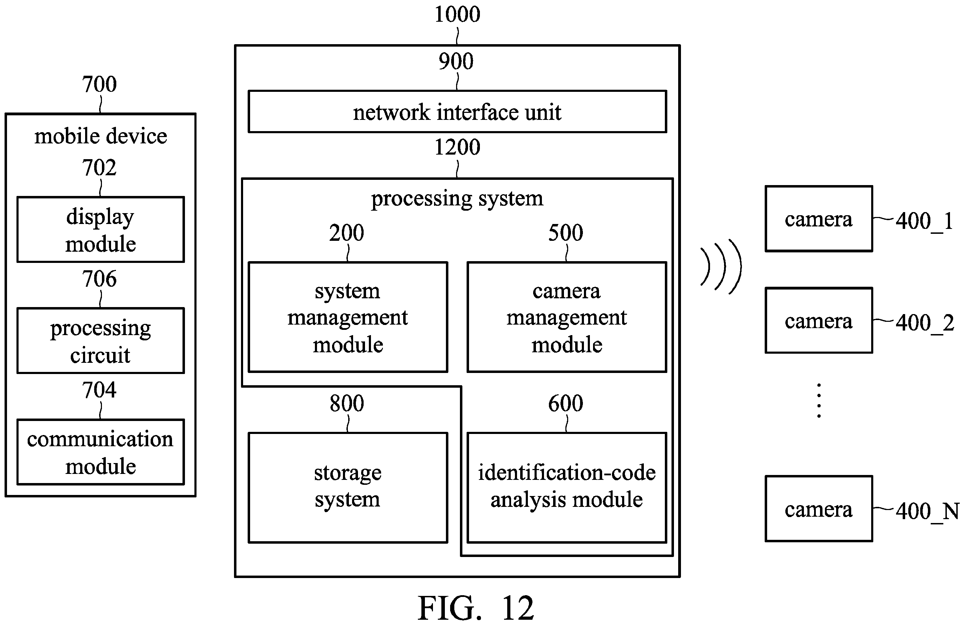

FIG. 7 is a flow chart illustrating a method applied to a video surveillance system in accordance with an embodiment of the present invention. The method can be applied to the video surveillance system 1000 of FIG. 1 or FIG. 12. The process starts at operation S700.

In operation S700, the video surveillance system 1000 detects whether an identification code detection request IC_{D} exists. In some embodiments, the identification code detection request IC_{D} can be transmitted to the video surveillance system 1000 from the mobile device 700. In another embodiment, the reaction wherein the system management module 200 produces the identification code IC in response to the identification-code request IC_{R} can be regarded as an identification code detection request IC_{D}. When the video surveillance system 1000 detects the identification code detection request IC_{D}, the process goes to operation S702, otherwise, the video surveillance system 1000 continues to detect whether an identification code detection request IC_{D} exists.

In operation S702, the video surveillance system 1000 receives a plurality of video streams captured by a plurality of cameras 400_1 - 400_N. More specifically, the video streams captured by the plurality of cameras 400_1 - 400_N are received by a camera management module 500 of the video surveillance system 1000 as shown in FIG. 1 and FIG. 12. In one of the embodiments, after receiving the video streams, the camera management module 500 is configured to transmit the captured video streams to an identification-code analysis module 600 periodically to perform operation S704, the details of which are in FIG. 2.

Next, in operation S704, the video surveillance system 1000 identifies whether the video streams include an identification code in response to the identification code detection request IC_{D}. More specifically, the identification-code analysis module 600 is configured to detect whether the video streams received from the camera management module 500 include an identification code IC in response to an identification code detection request IC_{D}. When the video surveillance system 1000 identifies that the video streams include an identification code, the process goes to operation S706, otherwise, the process ends at operation S704.

In operation S706, the video surveillance system 1000 decodes the identification code IC obtained from the video stream to obtain information of the identification code IC. In an embodiment, the identification code IC can be a QR code, but the present invention is not limited thereto. In other embodiments, the identification code IC can be a bar code or digital codes. It should be appreciated that, in an embodiment, the information of the identification code IC includes the information of the mobile device 700. For example, the identification code IC may include the contact information of the mobile device 700, such as phone number, Internet Protocol address and MAC address of the mobile device.

Next, in operation S708, the video surveillance system 1000 provides at least one service to the mobile device 700 according to the information of the mobile device 700 and/or information of one of the cameras that has captured the identification code IC. It should be appreciated that the information of the cameras may include the identification code, the model number, the brand name, the location, and/or other details about the camera. The process ends at operation S708.

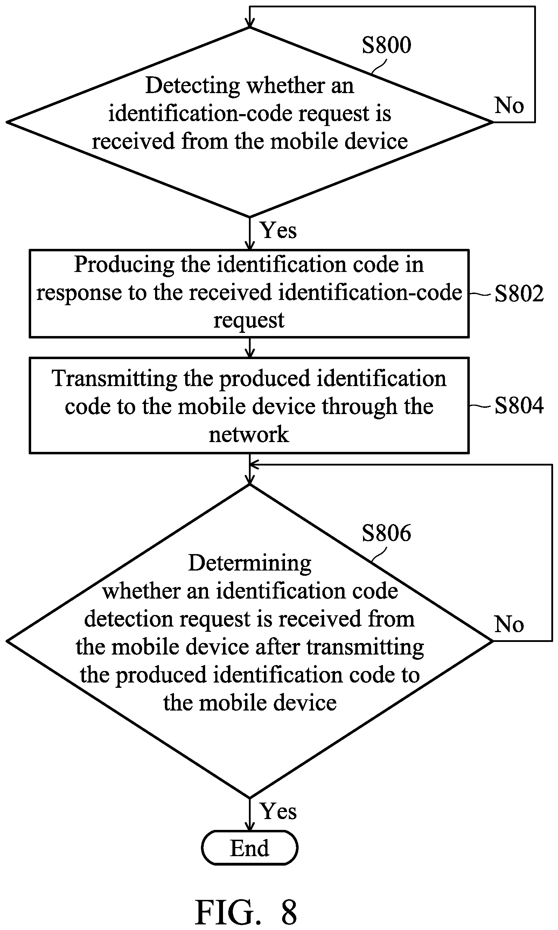

FIG. 8 is a flow chart illustrating a method for detecting an identification code detection request in accordance with an embodiment of the present invention. The method for detecting an identification code detection request is an embodiment of operation S700 of FIG. 7, and can be applied to the video surveillance system 1000 of FIG. 1 and FIG. 12. The process starts at operation S800.

In operation S800, the video surveillance system 1000 detects whether an identification-code request IC_{R} is received from the mobile device 700. When the video surveillance system 1000 detects that an identification-code request IC_{R} is received from the mobile device 700, the process goes to operation S802, otherwise, the video surveillance system 1000 continues to detect whether an identification-code request IC_{R} is received from the mobile device 700.

In operation S802, the video surveillance system 1000 produces the identification code IC in response to the received identification-code request IC_{R}. In an embodiment, the video surveillance system 1000 is configured to produce the identification code IC according to the information of the mobile device 700. The identification-code request IC_{R} includes identification data. For example, the identification data may include such information as the phone number, Internet Protocol address and/or MAC address of the mobile device 700, but the present invention is not limited thereto. In some embodiments, the identification-code request IC_{R} may include any other identification data of the mobile device 700. When the system management module 200 receives the identification-code request IC_{R} including the contact information of the mobile device 700, e.g. a phone number, an Internet Protocol address and/or a MAC address, the system management module 200 produces the identification code IC according to the information of the mobile device 700. That is, the identification code IC may also include the contact information of the mobile device 700.

Next, in operation S804, the video surveillance system 1000 transmits the produced identification code IC to the mobile device 700 through the network, such as 3G, 4G or EDGE, WiFi (IEEE 802.11 family standards, or other mobile communication technologies, or any combination thereof).

Next, in operation S806, the video surveillance system 1000 determines whether an identification code detection request IC_{D} is received from the mobile device 700 after transmitting the produced identification code IC to the mobile device 700. It should be appreciated that, if the identification code detection request IC_{D} is received from the mobile device 700, that means the video surveillance system 1000 detects that an identification code detection request IC_{D} exists. The process ends at operation S806.

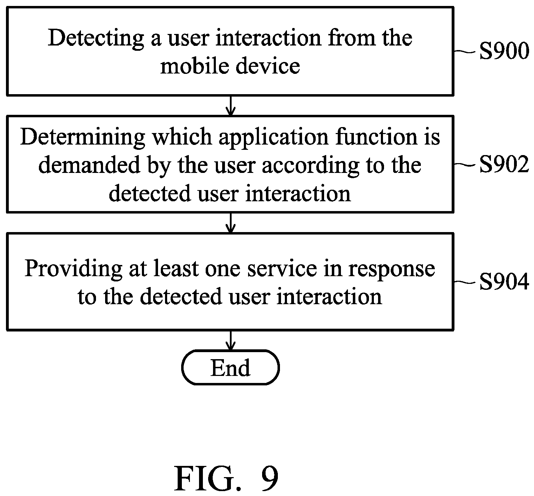

FIG. 9 is a flow chart illustrating a method for providing a service in accordance with an embodiment of the present invention. The method for providing a service is an embodiment of operation S708 of FIG. 7, and can be applied to the video surveillance system 1000 of FIG. 1 and FIG. 12. The process starts at operation S900.

In operation S900, the video surveillance system 1000 detects a user interaction from the mobile device 700. In one embodiment, the video surveillance system 1000 may detect the user interaction by the signals received from the mobile device 700.

Next, in operation S902, the video surveillance system 1000 determines which application function is demanded by the user according to the detected user interaction. More specifically, in one embodiment, the video surveillance system 1000 can determine which application function is selected by the user according to the returned signal, so that the video surveillance system 1000 can know which application function is demanded by the user.

Next, in operation S904, the video surveillance system 1000 provides at least one service in response to the detected user interaction. In one embodiment, when the user interaction shows that the user requires voice communication, the video surveillance system 1000 establishes voice communication with the mobile device 700 or one of the cameras 400_1 - 400_N, the details of which can be seen in FIG. 4. In another embodiment, when the user interaction shows that the user requires a camera location, the video surveillance system 1000 transmits an E-map identifying the position of one of the cameras 400_1 - 400_N to the mobile device 700, the details of which are in FIG. 5. In yet another embodiment, when the user interaction shows that the user requires a camera adjustment, the video surveillance system 1000 transmits camera-adjustment options of one of the cameras 400_1 - 400_N to the mobile device 700, the details of which are in FIG. 6. The process ends at operation S904.

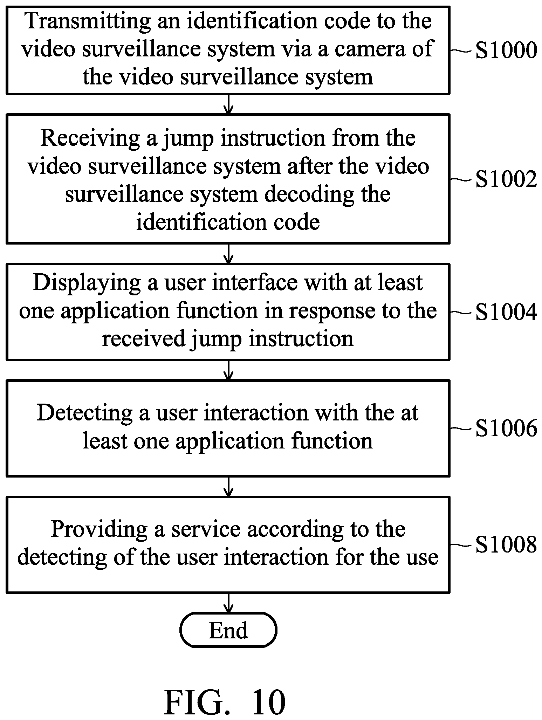

FIG. 10 is a flow chart illustrating a method for activating a service by a video surveillance system with an embodiment of the present invention. The method for activating a service by a video surveillance system is applied to the mobile device 700 of FIG. 1 or FIG. 12. The process starts at operation S1000.

In operation S1000, the mobile device 700 transmits an identification code IC to the video surveillance system 1000 via a camera of the video surveillance system 1000, in which the identification code IC includes contact information of the mobile device 700. The identification code IC is transmitted to the video surveillance system 1000 by showing the identification code IC to one of the cameras 400_1 - 400_N. It should be appreciated that, in order to show the identification code IC to one of the cameras 400_1 - 400_N, the mobile device 700 has to display the identification code IC, e.g. QR code, in the perspective view of one of the cameras 400_1 - 400_N. In one of the embodiments, the mobile device 700 may have an identification-code producer (not shown) to produce the identification code IC according to its own information, but it is not limited thereto. In another embodiment, the identification code IC can be procured by the video surveillance system 1000 in response to an identification-code request IC_{R} that is transmitted to the video surveillance system 1000 by the mobile device 700, and the mobile device 700 can receive the identification code IC from the video surveillance system 1000 after transmitting the identification-code request IC_{R}.

Next, in operation S1002, the mobile device 700 receives a jump instruction from the video surveillance system 1000 after the video surveillance system 1000 has decoded the identification code IC.

Next, in operation S1004, the mobile device 700 displays a user interface with at least one application function in response to the received jump instruction. The application functions may be represented by icons or characters that the user may choose.

Next, in operation S1006, the mobile device 700 detects a user interaction with the application function. More specifically, the mobile device 700 may detect whether the user has selected any one of the application functions by pressing the corresponding icon, moving the mobile device 700 by a predetermined rule, or inputting a voice message, etc. Furthermore, the mobile device 700 may transmit the detected result to the video surveillance system 1000.

Next, in operation S1008, the mobile device 700 provides a service to the user according to the user interaction that has been detected. In one embodiment, the service is provided by the video surveillance system 1000 and passed to the user by the mobile device 700. The service can be voice communication, camera location, and/or camera adjustment, etc., the details can be referred to FIG. 4-FIG. 6. The process ends at operation S1008.

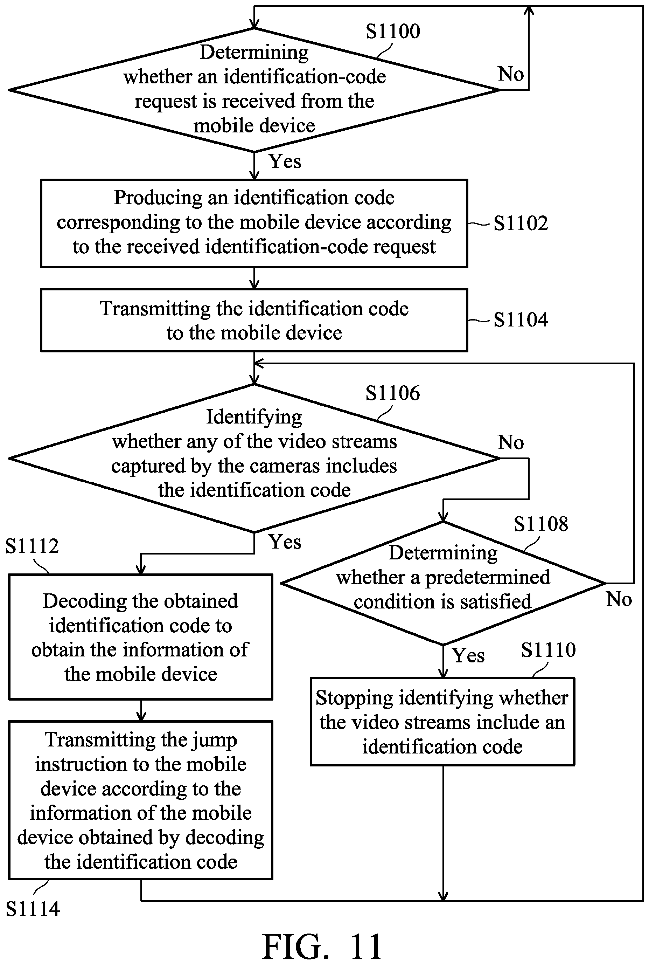

FIG. 11 is a flow chart illustrating a method applied to a video surveillance system in accordance with another embodiment of the present invention. The method is applied to the video surveillance system 1000 of FIG. 1 and FIG. 12. The process starts at operation S1100.

In operation S1100, the video surveillance system 1000 determines whether an identification-code request IC_{R} is received from the mobile device 700. The identification-code request IC_{R} may include the phone number, Internet Protocol address, MAC address and/or other identification data of the mobile device 700, but it is not limited thereto. When the video surveillance system 1000 receives an identification-code request IC_{R} from the mobile device 700, the process goes to operation S1102, otherwise the video surveillance system 1000 continues to determine whether an identification-code request IC_{R} is received from the mobile device 700.

Next, in operation S1102, the video surveillance system 1000 produces an identification code IC corresponding to the mobile device 700 according to the received identification-code request IC_{R}.

Next, in operation S1104, the video surveillance system 1000 transmits the identification code IC to the mobile device 700.

Next, in operation S1106, the video surveillance system 1000 identifies whether any of the video streams captured by the cameras 400_1 - 400_N includes the identification code IC. When the video surveillance system 1000 receives the identification-code request IC_{R}, the video surveillance system 1000 starts to identify whether any of the video streams includes the identification code IC at a predetermined time interval. The predetermined time interval can be selected by the developer for improving computing performance and maintaining the performance of image recognition. When the video surveillance system 1000 identifies that any of the video streams captured by the cameras 400_1 - 400_N includes the identification code IC, the process goes to operation S1112, otherwise the process goes to operation S1108.

In operation S1108, the video surveillance system 1000 determines whether a predetermined condition is satisfied. In one embodiment, the predetermined condition is that of having received a stop signal from the mobile device 700, but it is not limited thereto. In another embodiment, the predetermined condition is that a predetermined waiting time has elapsed since the identification code was transmitted. When the predetermined condition is satisfied, the process goes to operation S1110, otherwise the process returns to operation S1106, and the video surveillance system 1000 continues to identify whether any of the video streams captured by the cameras 400_1 - 400_N includes an identification code. The predetermined waiting time can be 10 seconds, 20 seconds, or another time period chosen by the developer.

It should be appreciated that, in this embodiment, when the mobile device 700 receives the identification code IC from the video surveillance system 1000, the mobile device 700 adds the identification code IC into the identification code request interface 710, and displays the identification-code request interface 710 and the identification code IC on the screen. When the identification-code request interface 710 is turned off, the mobile device 700 transmits a stop signal to the video surveillance system 1000, so that the video surveillance system 1000 can stop identifying whether the video streams captured by the cameras 400_1 - 400_N include the identification code IC. In other modified examples of this embodiment, when the mobile device 700 receives the identification code IC from the video surveillance system 1000, the mobile device 700 may turn off the identification-code request interface 710 and turn on another interface that is arranged to display the identification code IC. When the interface that is arranged to display the identification code IC is turned off, the mobile device 700 may transmit a stop signal to the video surveillance system 1000 for stopping the identification. It should be appreciated that the stop signal can avoid unnecessary image identification, improve computing performance, and maintain the performance of the video surveillance system 1000.

In operation S1110, the video surveillance system 1000 stops identifying whether the video streams include the identification code IC. Next, the process returns to operation S1100, and the video surveillance system 1000 continues to determine whether an identification-code request IC_{R} is received from the mobile device 700.

In operation S1112, the video surveillance system 1000 decodes the obtained identification code IC to obtain the information of the mobile device 700.

Next, in operation S1114, the video surveillance system 1000 transmits the jump instruction to the mobile device 700 for providing the corresponding service to the mobile device 700 according to the information of the mobile device 700 obtained by decoding the identification code.

It should be appreciated that the methods of FIG. 7 ∼ FIG. 11 can be a computer program product stored in non-transitory tangible media that is readable by computer, and the computer program product can be executed by an electronic device having at least one processor.

FIG. 12 is a schematic diagram illustrating a monitoring service system, cameras, and a mobile device in accordance with another embodiment of the present invention. The video surveillance system 1000 can include a network interface unit 900, a processing unit 1200, and a storage system 800. The network interface unit 900 is a device that is capable of transmitting data through the network and processing the network packages. In this embodiment, the processing system 1200 can transmit data to the mobile device 700 and the cameras 400_1 - 400_N and receive data from the mobile device 700 and the cameras 400_1 - 400_N via the network interface unit 900. The storage device 800 may include a flash memory, a solid-state drive, a hard disk, a random access memory and/or a read only memory, for storing parameters and data. The processing system 1200 can be implemented in software, hardware (integrated circuit), or a combination thereof. In some embodiments, the software can be stored on a transitory or non-transitory computer readable storage medium and can be executed by one or more processing units. In one embodiment, the processing system 1200 may include a computing circuit, registers, a read only memory, and a random access memory, etc. The program code stored in the read only memory and data stored in the random access memory of the processing system 1200 and/or the storage system 800 constitute the system management module 200, the camera management module 500 and the identification code analysis module 600 executed by the computing circuit to perform the methods and operations of the embodiments. FIG. 1 can be referred to for details of the operations of the system management module 200, the camera management module 500, and the identification code analysis module 600. It should be appreciated that the video surveillance system 1000 as shown in FIG. 12 can include more or fewer components than those shown in FIG. 12. In some embodiments, the video surveillance system 1000 can be a part of an electronic computer device, such as a network attached storage (NAS) server.

The mobile device 700, as shown in FIG. 12, includes a communication module 704, a display module 702 and a processing circuit 706. The communication module 704 can be a wired network card or a wireless network card compatible with GPRS, 802.11, 3G or 4G, etc., but it is not limited thereto. The display module 702 can be a LCD display, a LED display or a flexible display, but it is not limited thereto. The processing circuit 706 may execute a program module A (not shown) to control the mobile device 700, and the program module A can be stored in the processing circuit 706 or obtained from devices other than the processing circuit 706. The program module A may be a software code, or a firmware code, but it is not limited thereto. The above examples are for the purpose of illustration, and they do not pose limitations to the present invention. In some of the embodiments, the processing circuit 706 can be implemented in an Application-Specific Integrated Circuit (ASIC), wherein the program module A can be a built-in program module of the application-specific integrated circuit.

The cameras 400_1 - 400_N can be monitors arranged to capture images of different places to produce video streams, and the cameras 400_1 - 400_N can store the video streams in a memory or transmit the video streams to the video surveillance system 1000. The video surveillance system 1000 may use the video streams to provide service or to monitor areas in view of the cameras 400_1 - 400_N.

As described above, the mobile device 700 may activate a service of the video surveillance system 1000 by showing the identification code IC to the neighboring camera. The video surveillance system 1000 may obtain the information of the mobile device 700 by the identification code IC in the video streams captured by the camera. Since the video surveillance system 1000 can determine which camera captures the identification code IC displayed by the mobile device 700 and can obtain the information of the mobile device 700 from the identification code IC, the video surveillance system 1000 can accordingly locate the mobile device 700 based on the location of the camera that captured the identification code IC, establish a voice call or video call to the mobile device 700, and provide any information that the mobile device demands. Therefore, User Experience is improved, in which the difficulties of selecting camera and adjusting camera, which are caused by the size limitation of mobile device and the complicated information of cameras, are removed. More specifically, it is easier for users to select or adjust a specific camera by only showing the identification code IC to the specific camera.

In accordance with some embodiments, a video surveillance system is provided. The video surveillance system includes a processing system, a storage system and one or more programs. The programs are stored in the storage system and configured to be executed by the processing system. The programs include instructions for receiving a plurality of video streams captured by a plurality of cameras, detecting whether the video streams include an identification code in response to an identification code detection request, and decoding the identification code obtained from the video streams to obtain information of the identification code, in which the information of the identification code includes a mobile device's information.

In accordance with some embodiments, a method applied to a video surveillance system is provided. The method includes receiving a plurality of video streams captured by a plurality of cameras, identifying whether the video streams comprise an identification code in response to an identification code detection request, and decoding the identification code obtained from the video stream to obtain information in the identification code, in which the information of the identification code comprises a mobile device's information.

In accordance with some embodiments, a method for activating a service by a video surveillance system, applied to a mobile device, is provided. The method includes transmitting an identification code to the video surveillance system via a camera of the video surveillance system, in which the identification code includes contact information of the mobile device. The method also includes receiving a jump instruction from the video surveillance system after the video surveillance system has decoded the identification code, displaying a user interface with at least one application function in response to the jump instruction, detecting a user interaction with the application function, and providing the service according to the user interaction that has been detected.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A video surveillance system , comprising:
a processing system;
a storage system; and
one or more programs, wherein the one or more programs are stored in the storage system and configured to be executed by the processing system, wherein the one or more programs include instructions for:
receiving a plurality of video streams captured by a plurality of cameras; and
detecting whether the video streams comprise an identification code in response to an identification code detection request, and decoding the identification code obtained from the video streams to obtain information of the identification code;
wherein the information of the identification code comprises a mobile device's information.

2. The video surveillance system as claimed in claim 1, further comprising:
detecting the identification code detection request.

3. The video surveillance system as claimed in claim 1 or 2, further comprising:
producing the identification code in response to an identification-code request received from the mobile device, and transmitting the identification code to the mobile device, wherein the identification-code request comprises contact information of the mobile device.

4. The video surveillance system as claimed in any of claims 1 to 3, further comprising:
providing at least one service to the mobile device according to the information of the mobile device or according to information of one of the plurality of cameras that captures the identification code.

5. The video surveillance system as claimed in any of claims 1 to 4, further comprising:
establishing voice communication with the mobile device or said camera after obtaining the information of the identification code.

6. The video surveillance system as claimed in any of claims 1 to 5, further comprising:
identifying a position of said camera on an electronic map (E-map) according to information of one of the plurality of cameras that captures the identification code.

7. The video surveillance system as claimed in any of claims 1 to 6, further comprising: transmitting camera-adjustment information of one of the plurality of cameras to the mobile device according to information of one of the plurality of cameras and the information of the mobile device.

8. A method applied to a video surveillance system, the method comprising:
receiving a plurality of video streams captured by a plurality of cameras;
identifying whether the video streams comprise an identification code in response to an identification code detection request; and
decoding the identification code obtained from the video stream to obtain information of the identification code;
wherein the information of the identification code comprises a mobile device's information.

9. The method as claimed in claim 8, further comprising:
detecting the identification code detection request;
producing an identification code in response to an identification-code request received from a mobile device; and
transmitting the identification code to the mobile device, wherein the identification-code request comprises the information of the mobile device, and the operation of producing the identification code in response to the identification-code request received from the mobile device further comprises producing the identification code according to the information of the mobile device.

10. The method as claimed in claim 8 or 9, further comprising:
providing at least one service to the mobile device according to information of the mobile device or according to information of one of the plurality of cameras that captures the identification code.

11. The method as claimed in any of claims 8 to 10, further comprising:
detecting a user interaction with the mobile device;
in response to detecting user interaction, establishing voice communication with the mobile device or the one of a plurality of cameras.

12. The method as claimed in any of claims 8 to 11, further comprising:
detecting a user interaction with the mobile device;
in response to detecting user interaction, transmitting an E-map identifying a position of said camera to the mobile device.

13. The method as claimed in any of claims 8 to 12, further comprising:
detecting a user interaction with the mobile device;
in response to detecting user interaction, transmitting camera-adjustment information of said camera to the mobile device.

14. A method for activating a service by a video surveillance system, applied to a mobile device, the method comprising:
transmitting an identification code to the video surveillance system via a camera of the video surveillance system, wherein the identification code comprises contact information of the mobile device;
receiving a jump instruction from the video surveillance system after the video surveillance system has decoded the identification code;
in response to the jump instruction, displaying a user interface with at least one application function;
detecting a user interaction with the at least one application function; and
providing the service according to detected user interaction.

15. The method as claimed in claim 14, further comprising:
receiving the identification code from the monitoring service system after transmitting an identification-code request; and
displaying the identification code in perspective view of the camera, wherein the identification-code request comprises the contact information of the mobile device.
